# EUROPEAN PATENT APPLICATION

(11) **EP 4 814 387 A1**
(43) Date of publication of application: **30.09.2026**
(21) Application number: 26166803.2
(22) Date of filing: 23.03.2026
(51) Int. Cl.: F24D 3/02, F24D 3/18, F24D 19/10, F24H 9/20, F24H 15/34, H02P 7/00, H05K 7/14, F24F 11/88

(54) **CONDITIONING SYSTEM AND HEAT GENERATOR**

(30) Priority: 26.03.2025 IT 202500006246
(71) Applicant: TACO ITALIA S.r.l., 36066 Sandrigo (VI) (IT)
(72) Inventor: MURARO, Cristian, 36010 Monticello Conte Otto (VI) (IT); GUERRINI, Alessio, 36061 Bassano del Grappa (VI) (IT)
(74) Representative: Botti & Ferrari S.p.A.

(57) **Abstract**

A conditioning system (100), connectable to a conditioning circuit (1), comprising a heat generator (2) carrying a respective control unit (4), said control unit (4) comprising a primary electronic board (10) and a secondary electronic board (20) operationally connected to the primary electronic board (10), wherein the primary electronic board (10) is configured to control at least the activation and shutdown of said heat generator (2). The secondary electronic board (20) or the primary electronic board (10) comprises at least one electrical power output (22) connectable or connected to an electric motor of a hydraulic circulator (3) of the conditioning circuit (1).

## Description

### FIELD OF THE INVENTION

The object of the present invention relates to a heat generator, for example a boiler for winter heating or a heat pump for heating and/or cooling, comprising a primary electronic board and a secondary electronic board connected to the primary electronic board, wherein the secondary electronic board comprises power outputs connectable to a remote hydraulic circulator.

Moreover, the present invention is directed to a conditioning system comprising the heat generator and the hydraulic circulator.

### PRIOR ART

In the air conditioning field, for example in the field of winter air conditioning intended for heating rooms or in the field of summer air conditioning intended for cooling rooms, conditioning systems are known, comprising a heat generator having its own control unit configured to allow the operation of the air conditioning apparatus itself. For example, in the case of a gas boiler, the control unit may be configured to control the flame ignition and extinguishment, to open and close the electronic gas valve, and to control the activation and extinguishment, as well as to control the speed of the fan arranged to manage the flow of combustion gases or sucked air. Moreover, the control unit of a gas boiler is configured to perform a plurality of processes for monitoring the delivery and/or return temperatures of the working fluid (for example water) and to control the flame intensity, in order to modulate the thermal output generated by the heat generator.

Moreover, the control unit on board the gas boiler may be configured to control a hydraulic circulator arranged to determine the working fluid circulation in the heating circuit: the heating circuit may usually comprise a plurality of pipes connected to radiators or fan coils, or to a floor or ceiling radiant system.

The prior art provides that each circulator comprises its own on-board electronic power board, that is an electronic board positioned on board the circulator itself configured both to receive an electrical or electronic signal from the boiler control unit, to control the circulator activation and stop, and to receive an electrical power connection adapted to determine the actual rotation of the circulator electric motor. For example, in case of hydraulic circulators with synchronous or asynchronous motor, the on-board electronic board of the pump may comprise an inverter (driver) adapted to control the motor electronic switching, providing appropriate voltages and currents to the coils of the electric motor: in that case, the electric motor may be a brushless electric motor.

Moreover, the on-board electronic board of the pump may comprise an AC-DC (Alternating Current - Direct Current) converter that turns the mains voltage (ad es. 230Vac or 110Vac) into a stable direct voltage to power electronics.

Common circulators of air conditioning circuits thus provide both to receive control signals, for example from the heat generator control unit to control the electric motor activation and stop, and to receive a power supply cable arranged to supply electrical power adapted to power the coils of the electric motor, and thus to actually determine the circulator rotation.

However, the presence of an electronic board on board the circulator creates quite a few problems, due to the high temperatures which the pump is subjected to: in fact it should be noted that the pump is subjected to heating both by the working fluid (that is by the output fluid from the boiler at high temperature and intended to flow in the heating circuit to heat rooms), and by the electrical power absorbed by the electric motor. It should be noted that a circulator for this kind of applications can absorb up to 300 W.

The heat which common circulators are exposed to determines an increase in temperature of the on-board electronic board: high temperatures kept for long periods (in the vast majority of cases circulators uninterruptedly operate for many months of the year) may damage the on-board electronics. For example, microcontrollers, inverters (drivers), capacitors, welds and electrical tracks of the printed circuit can deteriorate with temperature determining a malfunctioning or the complete shutdown of the circulator.

The prior art comprises some measures to try to overcome this problem, for example applying a heat exchanger to the on-board electronic board of the circulator in order to reduce the maximum temperatures which the electronic board is subjected to or choosing components that withstand high temperatures.

However, this solution has some disadvantages. In order to effectively dissipate heat, the sink is made of a metallic material (for example copper or aluminium): this leads to an increase in manufacturing costs, and to electrical safety measures, since the metal sink, besides being an excellent heat conductor, is an excellent current conductor. Solutions comprising dissipators made of a non-metallic material are known, but the heat transfer capacity is reduced and the sink size is greater.

Furthermore, as is the case in the prior art, the fact that each circulator comprises its own electronic board makes, in case of failure of the motor or electronic board, the entire circulator to be replaced, although one of the parts is still operating.

### OBJECT OF THE INVENTION

The object of the present invention is therefore to solve at least one of the drawbacks and/or limitations of the previous solutions.

A first object is to reduce the temperature of the on-board electronics of the hydraulic circulator.

A further object is to facilitate the communication between the heat generator and the hydraulic circulator.

A further object is to reduce the amount of cables coming to the hydraulic circulator, in order to simplify the installation thereof.

A further object is to facilitate the circulator maintenance operations.

A further object is to reduce the environmental impact in case of circulator malfunctioning.

A further object is to achieve the previous objects while keeping unchanged or reducing the manufacturing costs of the circulator and/or heat generator.

These and other objects, which will become more apparent from the following description, are substantially achieved by an electronic board, a heat generator and an air conditioning system in accordance with one or more of the attached claims and/or following aspects.

### SUMMARY

Some aspects of the invention are described hereinafter.

In a 1^{st} aspect a conditioning system (100) connectable to a conditioning circuit (1) is provided, said conditioning system (100) comprising:
- a heat generator (2) carrying a respective control unit (4), said control unit (4) comprising a primary electronic board (10) and a secondary electronic board (20) operationally connected to the primary electronic board (10).

In an aspect 1 bis according to the preceding aspect, one of the primary electronic board (10) and the secondary electronic board (20) carries at least one electrical power output (22) connectable or connected to an electric motor of a hydraulic circulator (3).

In an aspect 1 ter according to aspect 1, the secondary electronic board (20) carries at least one electrical power output (22) connectable or connected to an electric motor of a hydraulic circulator (3).

In a 2^{nd} aspect in accordance with aspect 1 bis or 1 ter, the conditioning system comprises said hydraulic circulator (3).

In a 3^{rd} aspect according to any one of the preceding aspects, said hydraulic circulator (3) is configured to determine the circulation of a working fluid within said conditioning circuit (1), wherein said electric motor of the hydraulic circulator (3) is activatable to determine said working fluid circulation.

In a 4^{th} aspect according to any one of the preceding aspects, the secondary electronic board (20) comprises at least one electrical input (21) configured to receive at least one electrical signal from said primary electronic board (10) to control at least the activation and shutdown of said hydraulic circulator (3).

In a 5^{th} aspect according to any one of the preceding aspects, said at least one electrical power output (22) is configured to withstand a maximum electrical power that is greater than 3W, optionally greater than 5W, optionally between 3W and 500W.

In a 6^{th} aspect according to any one of the preceding aspects, said at least one electrical power output (22) is configured to withstand a maximum electrical power between 5W and 500W, optionally between 10W and 250W or between 20W and 250W.

In a 7^{th} aspect according to any one of the preceding aspects, said secondary electronic board (20) is configured to supply, through said electrical power output (22), an electric current and voltage having intensity and frequency features that, when powering coils of the electric motor of the hydraulic circulator (3), allow the operation of said electric motor of the hydraulic circulator (3).

In an 8^{th} aspect according to any one of the preceding aspects, said secondary electronic board (20) comprises at least one inverter (23) configured to electrically power electric coils of the electric motor of the hydraulic circulator (3).

In a 9^{th} aspect according to the preceding aspect, said inverter is configured to output, through said at least one electrical power output (22), a maximum electrical power that is greater than 3W, optionally greater than 5W, optionally between 3W and 500W.

In a 10^{th} aspect according to the preceding aspect, said inverter is configured to output, through said at least one electrical power output (22), a maximum electrical power between 5W and 500W, optionally between 10W and 250W.

In an 11^{th} aspect according to any one of the preceding aspects in combination with aspect 8, said inverter (23) of the secondary electronic board (20) is configured to vary a rotation speed of the electric motor of the hydraulic circulator (3) by means of a respective control logic, said control logic comprising the variation by said inverter (23) of a frequency and/or intensity of the output voltage from said inverter (23) to be sent to the coils of the electric motor.

In a 12^{th} aspect according to any one of the preceding aspects in combination with aspect 8, said inverter (23) is configured to execute control logics for the operation of said electric motor of the hydraulic circulator (3), wherein said electric motor is a synchronous or asynchronous brushless motor.

In a 13^{th} aspect according to any one of the preceding aspects, said electric motor is a synchronous motor.

In a 14^{th} aspect according to any one of the preceding aspects 1 to 12, said electric motor is an asynchronous motor.

In a 15^{th} aspect according to any one of the preceding aspects, said electric motor is a brushless motor.

In a 16^{th} aspect according to any one of the preceding aspects, said electric motor comprises a stator and a rotor, wherein electric coils are carried by the stator and controlled by said secondary electronic board (20), in particular by said inverter (23) of the secondary electronic board (20).

In a 17^{th} aspect according to the preceding aspect, said rotor carries one or more permanent magnets.

In an 18^{th} aspect according to any one of the preceding aspects, said secondary electronic board (20) is configured to perform an electronic switching of the power supply current of the coils of the circulator electric motor.

In a 19^{th} aspect according to any one of the preceding aspects in combination with aspect 11, said control logic is executed, by said secondary electronic board (20) and in particular by said inverter (23), by means of a Pulse Width Modulation PWM.

In a 20^{th} aspect according to the preceding aspect, the inverter (23) is configured to perform a Pulse Width Modulation PWM by varying the supply voltage frequency of the electric motor of the hydraulic circulator (3).

In a 21^{st} aspect according to any one of the preceding aspects in combination with aspect 11, said control logic comprises an open-loop V/f [Volt/Hertz] control wherein the inverter (23) of the secondary electronic board (20) is configured to simultaneously vary the supply voltage intensity and frequency of the electric motor so as to keep the V/f ratio substantially constant, where "V" is the supply voltage of the electric motor and "f" is the frequency of said supply voltage.

In a 22^{nd} aspect according to any one of the preceding aspects in combination with aspect 11, said control logic comprises a closed-loop control of the vectorial FOC (Field Oriented Control) type.

In a 23^{rd} aspect according to any one of the preceding aspects in combination with aspect 11, said control logic comprises a closed-loop control of the DTC (Direct Torque Control) type.

In a 24^{th} aspect according to any one of the preceding aspects in combination with aspect 11, said control logic comprises a closed-loop control of the sensorless FOC type.

In a 25^{th} aspect according to any one of the preceding aspects in combination with aspect 8, said inverter (23) of the secondary electronic board (20) comprises at least one microprocessor (24) and at least one transistor (25) electrically connected to each other.

In a 26^{th} aspect according to the preceding aspect, electric outputs of said at least one transistor are connected to said at least one electrical power output (22).

In a 27^{th} aspect according to any one of the two preceding aspects and in combination with aspect 11, said at least one microprocessor (24) is configured to control said at least one transistor (25) to execute said control logic of the electric motor of the hydraulic circulator (3).

In a 28^{th} aspect according to any one of the preceding aspects in combination with aspect 8, said inverter (23) of the secondary electronic board (20) is separated and spaced apart from said hydraulic circulator (3).

In a 29^{th} aspect according to any one of the preceding aspects in combination with aspect 8, said hydraulic circulator (3) does not comprise said inverter (23).

In a 30^{th} aspect according to any one of the preceding aspects, the secondary electronic board (20) is physically constrainable or constrained, at least in one condition of use of the conditioning system (100), to the primary electronic board (10).

In a 31^{st} aspect according to any one of the preceding aspects, the primary electronic board (10) and the secondary electronic board (20) define, when constrained to each other, a single body.

In a 32^{nd} aspect according to any one of the preceding aspects, said primary electronic board (10) comprises at least one primary electrical connector (16) and said secondary electronic board (20) comprises at least one secondary electrical connector (26) in particular of said at least one electrical input (21),
wherein said primary electrical connector (16) is configured to operationally connect to said secondary electrical connector (26) to define an electrical connection between said primary electronic board (10) and said secondary electronic board (20).

In a 33^{rd} aspect according to the preceding aspect, said primary electrical connector (16) and said secondary electrical connector (26) define a removable connection system, which is optionally snap-fit or interference-fit, between said primary electronic board (10) and said secondary electronic board (20).

In a 34^{th} aspect according to any one of the two preceding aspects, said primary electrical connector (16) and said secondary electrical connector (26) define a male-female electrical connection.

In a 35^{th} aspect according to any one of the preceding aspects in combination with aspect 32, said primary electrical connector (16) is a female connector and said secondary electrical connector (26) is a male connector.

In a 36^{th} aspect according to any one of the preceding aspects in combination with aspect 32, said primary electrical connector (16) and said secondary electrical connector (26) define a rigid connection.

In a 37^{th} aspect according to any one of the preceding aspects in combination with aspect 4, said at least one electrical input (21) of the secondary electronic board (20) comprises at least one signal electrical input (21a) configured to define a signal communication between said primary electronic board (10) and said secondary electronic board (20)

In a 38^{th} aspect according to the preceding aspect, said signal communication is adapted to control said microprocessor (24) of the secondary electronic board (20).

In a 39^{th} aspect according to any one of the preceding aspects in combination with aspect 4, said at least one electrical input (21) of the secondary electronic board (20) comprises at least one electrical power input (21b, 21c) configured to electrically power the secondary electronic board (20) itself and the electric motor of the hydraulic circulator (3).

In a 40^{th} aspect according to the preceding aspect, said electrical power input (21b, 21c) of the secondary electronic board (20) is configured to withstand a maximum electrical power that is greater than 3W, optionally greater than 5W, optionally between 3W and 500W, more optionally between 5W and 500W, even more optionally between 10W and 250W.

In a 41^{st} aspect according to any one of the two preceding aspects, the electrical power input (21b, 21c) of the secondary electronic board (20) is electrically connectable or connected to the primary electronic board (10), in particular to the primary electrical connector (16) of the primary electronic board (10).

In a 42^{nd} aspect according to any one of the preceding aspects 39 and 40, the electrical power input (21b, 21c) of the secondary electronic board (20) is electrically connectable or connected to an auxiliary power supply socket that is distinct from said primary electronic board (10).

In an aspect 42 bis according to any one of the preceding aspects in combination with aspect 39, the electrical power input (21b, 21c) comprises an alternating current power supply input.

In an aspect 42 ter according to any one of the preceding aspects in combination with aspect 39, the electrical power input (21b, 21c) comprises a direct current power supply input.

In a 43^{rd} aspect according to any one of the preceding aspects, said heat generator (2) comprises a container defining an internal volume, said primary electronic board (10) and said secondary electronic board (20) being housed in said internal volume.

In a 44^{th} aspect according to any one of the preceding aspects, said primary electronic board (10) is configured to determine the activation, the interruption, and optionally also a modulation, of a thermal output by said heat generator (2).

In a 45^{th} aspect according to any one of the preceding aspects, said heat generator (2) is a boiler for heating rooms, for example a gas or pellet boiler, and wherein said primary electronic board (10) is configured to determine the activation, the interruption, and optionally also the modulation of the heat thermal output to be sent to the conditioning circuit (1), optionally wherein said primary electronic board (10) is configured to determine at least the activation and interruption, and optionally also the intensity modulation, of a flame for the generation of said thermal output.

In a 46^{th} aspect according to any one of the preceding aspects, said heat generator (2) is a heat pump for heating or cooling or for heating and cooling rooms.

In a 47^{th} aspect according to the preceding aspect, said heat pump comprises at least one electric motor, a compressor kinematically connected to said electric motor, and a closed-loop gas circuit configured to contain a refrigerant gas, wherein said primary electronic board (10) is configured to determine at least the activation and interruption, optionally also a modulation, of the electric motor of the heat pump.

In a 48^{th} aspect according to any one of the preceding aspects, said secondary electronic board (20) defines an add-on module which is mountable on and demountable from the primary electronic board (10).

In a 49^{th} aspect according to any one of the preceding aspects 1 to 47, said secondary electronic board (20) is welded to the primary electronic board (10).

In a 50^{th} aspect according to any one of the preceding aspects, said hydraulic circulator (3) comprises a pump body and said electric motor housed in said pump body.

In a 51^{st} aspect according to the preceding aspect, the secondary electronic board (20) is spaced apart from said pump body.

In a 52^{nd} aspect according to any one of the preceding aspects 50 and 51, the secondary electronic board (20) is not carried by said pump body.

In a 53^{rd} aspect according to any one of the preceding aspects, said hydraulic circulator (3) is not equipped with an on-board electronic board configured to control a speed variation of said electric motor of the hydraulic circulator (3).

In a 54^{th} aspect according to any one of the preceding aspects, said secondary electronic board (20) is in a remote position with respect to said electric motor of the hydraulic circulator (3).

In a 55^{th} aspect according to any one of the preceding aspects, once a first distance between said primary electronic board (10) and said secondary electronic board (20) has been defined and a second distance between said secondary electronic board (20) and said hydraulic circulator (3) has been defined, said second distance is greater than said first distance.

In a 56^{th} aspect according to the preceding aspect, a ratio between said second distance and said first distance is greater than 5, optionally greater than 10.

In a 57^{th} aspect according to any one of the preceding aspects, the at least one electrical power output (22) comprises a first power output (22a) and a second power output (22b), wherein the first power output is connectable or connected to the electric motor of the hydraulic circulator (3), and the second power output is connectable or connected to an auxiliary electric motor that is distinct from said hydraulic circulator (3).

In a 58^{th} aspect according to the preceding aspect, the inverter (23) of the secondary electronic board (20) comprises at least one first transistor and at least one second transistor, wherein the at least one first transistor is configured to electrically power the hydraulic circulator (3), and the at least one second transistor is configured to electrically power said auxiliary electric motor.

In a 59^{th} aspect according to any one of the two preceding aspects, the electric motor of the hydraulic circulator and the auxiliary electric motor are brushless electric motors.

In a 60^{th} aspect according to the preceding aspect, the electric motor of the hydraulic circulator (3) and the auxiliary electric motor are synchronous electric motors.

In a 61^{st} aspect according to aspect 59, the electric motor of the hydraulic circulator (3) and the auxiliary electric motor are asynchronous electric motors.

In an aspect 61a according to aspect 59, the electric motor of the hydraulic circulator (3) is an asynchronous electric motor, and the auxiliary electric motor is a synchronous electric motor,
or wherein the electric motor of the hydraulic circulator (3) is a synchronous electric motor, and the auxiliary electric motor is an asynchronous electric motor.

In an aspect 61b according to any one of aspects 57 to 61a, the conditioning system (100) comprises a fan configured to expel fumes from a combustion chamber of the heat generator (2) or to introduce air into said combustion chamber of the heat generator (2), wherein said fan comprises said auxiliary electric motor.

In an aspect 61c according to any one of aspects 57 to 61a, the conditioning system (100) comprises an auxiliary hydraulic circulator, which is distinct from said hydraulic circulator (3), comprising said auxiliary electric motor.

In an aspect 61d according to any one of aspects 57 to 61c, the first power output (22a) and the second power output (22b) are operationally independent of each other.

In a 62^{nd} aspect according to any one of the preceding aspects, the secondary electronic board (20) comprises at least one heatsink configured to dissipate thermal energy from the secondary electronic board (20).

In a 63^{rd} aspect according to the preceding aspect and in combination at least with aspect 8, said sink is thermally connected, in particular in contact, with said at least one inverter (23) of the secondary electronic board (20).

In a 64^{th} aspect according to the preceding aspect in combination with aspect 25, said sink is thermally connected, in particular in contact, with said at least one microprocessor (24) of the inverter (23).

In a 65^{th} aspect according to any one of the preceding aspects in combination with aspect 25, said sink is thermally connected, in particular in contact, with said at least one transistor (25).

In a 66^{th} aspect according to any one of the preceding aspects in combination with aspect 62, said sink is made of a metallic material, optionally aluminium or copper.

In a 67^{th} aspect according to any one of the preceding aspects 62 to 65, said sink is made of a polymer material, in particular wherein said sink made of a polymer material is electrically insulating.

In a 68^{th} aspect according to any one of the preceding aspects 62 to 67, said sink is interposed between said primary electronic board (10) and said secondary electronic board (20).

### BRIEF DESCRIPTION OF THE DRAWINGS

Some embodiments and some aspects of the invention will be described hereinafter with reference to the attached drawings, given by simple way of non-limiting examples, in which:
- Figure 1 is a schematic perspective view of a conditioning system in accordance with the present invention;
- Figure 2 is a schematic perspective view of the control unit of the heat generator comprising the primary electronic board and the secondary electronic board according to a top view;
- Figure 3 is a schematic perspective view of the control unit of the heat generator according to a bottom view;
- Figure 4 is a schematic perspective view of the control unit of the heat generator in which the primary electronic board is separated from the secondary electronic board;
- Figure 5 is a schematic perspective view of the control unit of the heat generator in which the primary electronic board is separated from the secondary electronic board according to a bottom view;
- Figure 6 is a schematic perspective view of the secondary electronic board according to a top view;
- Figure 7 is a schematic perspective view of the secondary electronic board according to a bottom view.

### DEFINITIONS AND CONVENTIONS

It should be noted that in the present detailed description corresponding parts illustrated in the several figures are indicated with the same numeral references. The figures might illustrate the subject matter of the invention by means of unscaled representations; therefore, parts and components illustrated in the figures concerning the subject matter of the invention might exclusively relate to schematic representations.

### Control unit

The heat generator and the circulator described and claimed herein may comprise at least one control unit arranged to control operating conditions. The control unit may be a single unit or be formed by a plurality of distinct control units depending on design choices and operating requirements.

The term control unit means an electronic component that may comprise at least one of: a digital processor (CPU), an analogue circuit, or a combination of one or more digital processors with one or more analogue circuits. The control unit may be *"configured"* or *"programmed"* to perform certain steps: this may be achieved in practice by any means allowing the control unit to be configured or programmed. For example, in the case of a control unit comprising one or more CPUs and one or more memories, one or more programs may be stored in appropriate memory banks connected to the CPU or CPUs; the program or programs include instructions that, when executed by the CPU or CPUs, program or configure the control unit to perform the operations described in relation to the control unit. Alternatively, if the control unit is or comprises an analogue circuitry, then the control unit circuit may be designed to include a circuitry configured, in use, to process electrical signals so as to perform the steps related to the control unit.

### Circulator

The present invention relates to hydraulic circulators. For the present invention, the term *"hydraulic circulators"* is identical or similar to the term *"hydraulic pumps",* defining in both cases devices adapted to determine the flow of a working fluid (for example water or a water-based fluid) within the heating/cooling circuit in order to exchange heat with the room subjected to air conditioning.

Both hydraulic pumps and hydraulic circulators are thus configured to determine a flow rate of the working fluid, for example measurable in m³/s, and a respective head, for example measurable in metres, to determine a fluid pressure downstream of the circulator that is greater than a respective pressure upstream of the circulator, in order to allow the working fluid to be delivered within the building.

### Heat generator

The term heat generator generally relates both to heat generators arranged to heat rooms, for example to a gas or pellet boiler or a heat pump or a combination thereof, and to cold generators arranged to cool rooms, for example heat pumps. The heat generator of the present invention is thus a generator that is capable of heating, or cooling, or both heating and cooling, a room, for example one or more rooms of a building like a house, an office or an industrial warehouse.

In the case of a boiler for heating, the gas being used may comprise methane gas, liquefied petroleum gas (GPL) or a combination of methane gas and hydrogen.

Alternatively, the heat generator for heating may be purely of the electric type, for example comprising an electrical resistor configured to heat up when an electric current passes through, and wherein said electrical resistor is adapted in turn to heat the working fluid.

### DETAILED DESCRIPTION

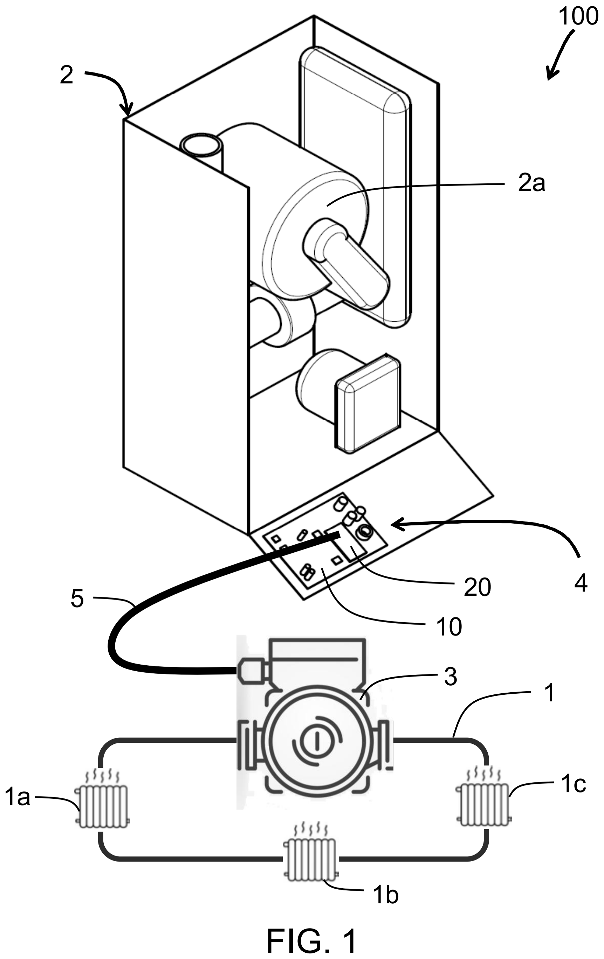

A conditioning system connectable to a conditioning circuit 1 has been globally indicated with 100. The conditioning circuit 1, schematically shown in figure 1, may comprise a hydraulic circuit comprising heaters 1a, 1b, 1c (for example radiators or fan coils). Alternatively, the hydraulic circuit may comprise a floor or ceiling radiant system. Generally speaking, the hydraulic circuit is configured to allow a flow of working fluid therein, so as to bring said working fluid towards radiant surfaces adapted for heating or cooling rooms. The working fluid is in liquid form and may comprise water or an additivated water-based liquid with substances arranged for example to reduce corrosion phenomena, algae or limescale build-up.

The conditioning system 100 further comprises a heat generator 2 arranged to generate a thermal output: said thermal output may be directed to cool rooms subjected to conditioning, or to heat said rooms. In the heating case, the heat generator 2 may be configured to increase the working fluid temperature up to temperatures of more than 30-35°, and optionally up to temperatures of 60-80° for producing domestic hot water and for heating radiators.

The heat generator 2, for example in the case of a boiler for heating, may comprise a heat exchanger 2a configured to be heated by a flame generated by a respective gas-or-pellet-powered burner. Specifically, the hydraulic circuit of the conditioning circuit 1 may comprise the heat exchanger 2a, such that the working fluid passes through the heat exchanger to receive thermal energy, and subsequently it releases said thermal energy to the rooms subjected to conditioning through heaters, radiators or through a floor or ceiling radiant system.

Alternatively, the heat generator 2 may comprise an internal hydraulic circuit containing a respective working fluid passing through the heat exchanger: the heat generator then comprises an additional heat exchanger interposed by way of separator between the internal hydraulic circuit of the heat generator 2 and the hydraulic circuit of the conditioning circuit 1.

Moreover, it should be noted that the above also applies to the case in which the heat generator 2 is a heat pump for heating and/or cooling rooms. Specifically, the heat pump comprises at least one electric motor, a compressor kinematically connected to the electric motor, and a closed-loop gas circuit configured to contain a refrigerant gas.

The heat generator 2 has a respective control unit 4 configured to perform the processes required to determine the room conditioning. Specifically, the control unit 4 comprises a primary electronic board 10 configured to control, for example, the activation and shutdown of the heat generator 2. Furthermore, the primary electronic board 10 may be configured to modulate the thermal output from the heat generator, for example by varying the flame intensity in the case of a gas or pellet boiler or by controlling an activation and deactivation or speed variation of the electric motor of the heat pump. Moreover, the primary electronic board 10 may be configured to perform safety procedures related to the heat generator, such as for example detecting the flame presence/absence in the burner or detecting excessive operating temperatures. Moreover, the primary electronic board 10 may be configured to detect the delivery and/or return temperatures of the working fluid, and to control the ignition and extinguishment and optionally also the flame modulation depending on the working fluid temperature. The primary electronic board 10 may thus be electrically connected to temperature sensors, to a fume or air supply fan in the combustion chamber of the heat generator 2, to the electronic gas valve and to a graphical interface for a user through respective connectors 12.

Moreover, the conditioning system 100 comprises at least one hydraulic circulator 3 configured to determine the working fluid circulation within the conditioning circuit 1. In detail, the conditioning system 100 may comprise one, two, three or more hydraulic circulators operating on the conditioning circuit: each hydraulic circulator may be dedicated to sending the working fluid to different areas of the conditioning circuit. The conditioning system 100 may comprise a first hydraulic circulator and a second hydraulic circulator, for example in the case in which the two circulators are dedicated to servicing different areas of the air conditioning circuit.

The hydraulic circulator 3 comprises therein an electric motor activatable to determine the working fluid circulation: said electric motor may be an asynchronous or synchronous brushless motor. In an embodiment, the electric motor of the hydraulic circulator is brushless and synchronous. Said electric motor of the hydraulic circulator may be single-phase or three-phase. In a specific embodiment, the electric motor of the hydraulic circulator 3 is a synchronous single-phase, alternatively three-phase, brushless electric motor. However, it should be noted that the present invention may moreover be directed to a hydraulic circulator 3 having an asynchronous single-phase or three-phase brushless motor.

The electric motor of the hydraulic circulator 3 may have a maximum electrical power that is greater than 3W [Watt], optionally greater than 5W, optionally between 3W and 500W. In detail, the maximum electrical power of the electric motor of the hydraulic circulator 3 may be between 5W and 500W, optionally between 10W and 250W or between 10W and 150W.

The hydraulic circulator 3 comprises a pump body accommodating therein the circulator electric motor, as well as an impeller connected in rotation to the motor to determine the working fluid flow. The pump body may be made of a metallic material, for example aluminium, copper, brass or bronze, or made of a plastic or composite material.

It should be noted that, since the circulator electric motor is an asynchronous or synchronous brushless motor, a variation of the rotation speed of said electric motor (as well as also its start) may be determined by means of complex control logics, for example by varying the supply voltage frequency over time of the electric motor or the waveform over time of said voltage. It should be noted that, in accordance with the present invention, dedicated electronics may be required to vary the speed of the motor, as well as to allow the operation thereof at a predetermined speed: said dedicated electronics is absent in said hydraulic circulator according to the present invention. In other words, said dedicated electronics is outside the pump body of the hydraulic circulator, and spaced apart therefrom. In fact, said dedicated electronics, described in detail below as a secondary electronic board, is instead carried by the primary electronic board 10 of the heat generator 2, and thus placed in a remote position with respect to the hydraulic circulator 3.

In this regard, the control unit 4 of the heat generator 2 comprises a secondary electronic board 20 carried by the heat generator 2 itself and configured to actively define the control of the electric motor of the hydraulic circulator, that is to implement the control logics required to control the speed of the hydraulic circulator. It should be noted that the secondary electronic board 20 may be directly connected to the electromagnetic coils of the electric motor of the hydraulic circulator 3: the above-mentioned control logics thus refer to the voltage and/or current power supply modes of the coils of the circulator electric motor. Alternatively, the primary electronic board 10 may be directly connected to power the electromagnetic coils of the electric motor of the hydraulic circulator 3: in that case, the electrical power output 22 connected to the circulator 3 may be carried by the primary electronic board.

In this regard, the secondary electronic board 20 comprises at least one electrical power output 22 connectable or connected to the electric motor of the hydraulic circulator 3, and in particular connected to power the electromagnetic coils of the electric motor. The electrical power output 22 of the secondary electronic board 20 is thus configured to withstand a maximum electrical power that is greater than 3W, optionally greater than 5W, optionally between 3W and 500W. In detail, the maximum electrical power of the electrical power output 22 of the secondary electronic board 20 is between 5W and 500W, optionally between 10W and 250W or between 10W and 150W.

The secondary electronic board 20 may further comprise at least one electrical input 21 configured to receive at least one electrical signal from the primary electronic board 10 to control at least the activation and shutdown of said hydraulic circulator 3.

The electrical input 21 of the secondary electronic board 20 may comprise at least one signal electrical input of 21a configured to define a signal communication between the primary electronic board 10 and the secondary electronic board 20: for example, the signal electrical input 21a may be configured to communicate with the microprocessor 24 of the secondary electronic board 20.

The electrical input 21 of the secondary electronic board 20 may comprise at least one electrical power input 21b, 21c configured to electrically power the electric motor of the hydraulic circulator 3. The electrical power input 21b, 21c of the secondary electronic board 20 may be configured to withstand a maximum electrical power that is equal or greater than the electrical power of the electric motor of the hydraulic circulator as detailed above. In particular the maximum power receivable by the power input 21b, 21c may be greater than 3W, optionally greater than 5W, optionally between 3W and 500W, more optionally between 5W and 500W, even more optionally between 10W and 250W.

The electrical power input 21b, 21c of the secondary electronic board 20 is electrically connectable or connected to the primary electronic board 10, for example to the primary electrical connector 16 of the primary electronic board 10, so that the electrical power supply energy of the electric motor comes from the primary electronic board 10, passes from the primary electronic board 10 to the secondary electronic board 20 through the primary electrical connector 16 and the secondary electrical connector 26, and gets to power the electric motor of the hydraulic circulator 3.

Alternatively, the electrical power input 21b, 21c of the secondary electronic board 20 is connectable or connected to an auxiliary power supply socket that is distinct from the primary electronic board 10: in that case, the electrical power supply energy of the electric motor does not pass through the primary electronic board 10, but instead it reaches the secondary electronic board 20 through a dedicated power line, for example a cable directly connected to the domestic mains.

The secondary electronic board may comprise an auxiliary connector 28 configured to receive from the electric motor a signal, for example a temperature signal, a signal of the angular position of the drive shaft, or a signal related to the control of the motor itself. In detail, the hydraulic circulator 3 may further comprise a temperature sensor configured to output a signal representing a temperature of the circulator electric motor. Said temperature sensor may be electrically connected to the secondary electronic board 20, wherein the latter is configured to receive said signal representing temperature and to calculate a respective temperature value. In particular the temperature sensor may be connected to the auxiliary connector 28 of the secondary electronic board arranged to power the sensor and to receive the temperature signal.

The secondary electronic board 20 may comprise at least one inverter 23 configured to electrically power the electric coils of the electric motor of the hydraulic circulator 3. It should be noted that the term inverter refers to a component arranged to physically execute the control logics allowing the start and speed modulation of the electric motor of the hydraulic circulator 3. In technical jargon, said inverter may also be called *"driver"* of the electric motor.

In detail, said control logics comprise the variation by the inverter 23 of a frequency and/or intensity of the output voltage from the inverter 23 to be sent to the coils of the circulator electric motor. In particular, said control logic is executed by the secondary electronic board 20, and in particular by the inverter 23 of the secondary electronic board 20, by means of a Pulse Width Modulation PWM. Said control mode is known to the person skilled in the art.

By way of example, the control logic may comprise an open-loop V/f [Volt/Hertz] control wherein the inverter 23 of the secondary electronic board 20 is configured to simultaneously vary the supply voltage intensity and frequency of the electric motor so as to keep the V/f ratio substantially constant, where "V" is the supply voltage of the electric motor and "f" is the supply voltage frequency. The speed of a synchronous or asynchronous motor depends on the supply voltage frequency, according to the formula: $n = \frac{f}{p} ⋅ 60$ where:
- n =: rotation speed of the motor in revolutions per minute (RPM);
- *f* =: frequency (Hz) of the supply voltage of the electric motor;
- *p* =: number of pole pairs.

If the rotation speed is to be varied, the supply voltage frequency has to be modified. However, by reducing only the frequency, the magnetic flux in the motor would increase, causing magnetic saturation problems.

To avoid this, the V/f control varies both the frequency and the voltage, keeping the ratio constant: $\frac{V}{f} = Constant$

Alternatively, the control logic may comprise a closed-loop control of the vectorial FOC (Field Oriented Control) type, or a closed-loop control of the DTC (Direct Torque Control) type, or a closed-loop control of the sensorless FOC (Field Oriented Control) type.

The above-described control logics are executed by the secondary electronic board 20 of the heat generator 2.

The maximum electrical power that can be supplied by the inverter may be substantially equal (or greater for safety reasons) to the maximum electrical power of the electric motor of the above-defined hydraulic circulator 3.

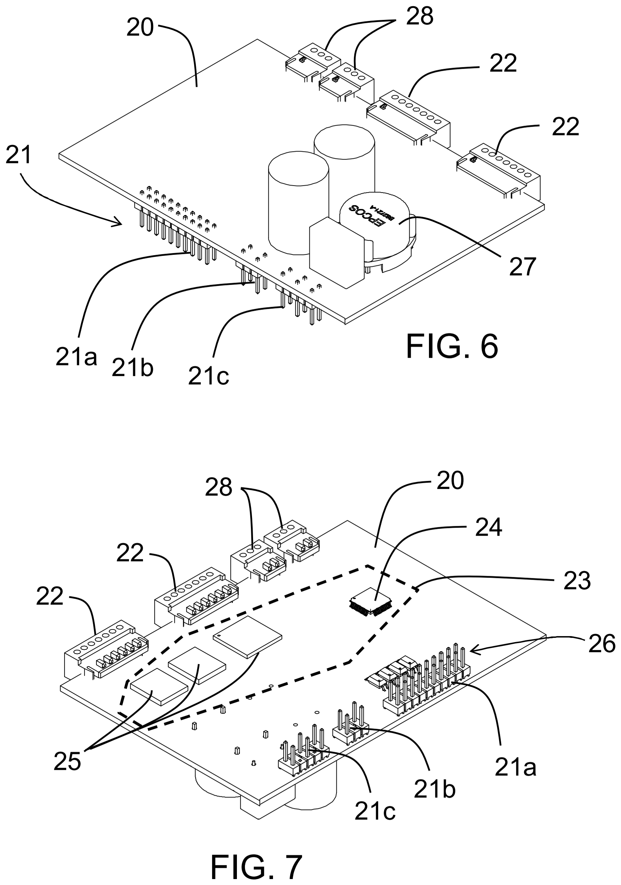

The inverter 23 of the secondary electronic board 20, shown by way of example in figure 7, may consists of sub-components, that is at least one microprocessor 24 and at least one transistor 25 electrically connected to each other, wherein electric outputs of the transistor 25 are connected to the electrical power output 22 of the secondary electronic board 20. In fact, the microprocessor 24 is configured to control the transistor 25 to execute the above-described control logics.

Moreover, the secondary electronic board 20 may comprise a frequency filter 27 to filter electromagnetic interferences. Said filter 27 is placed upstream of the inverter 23.

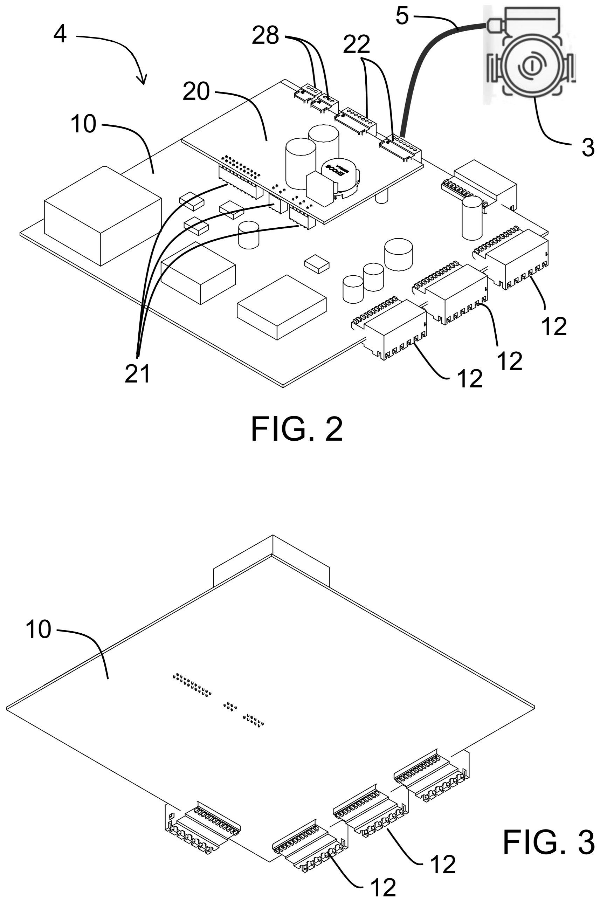

As shown in figures 2 to 5, the primary electronic board 10 physically carries the secondary electronic board 20. In detail, the secondary electronic board 20 is physically mounted on, and thus constrained to, the primary electronic board 10. In an embodiment, as shown by way of example in figure 2, the primary electronic board 10 and the secondary electronic board 20 define, when constrained to each other, a single body. In fact, the primary electronic board 10 and the secondary electronic board 20 are integral with each other.

For electrical safety reasons, the control unit 4 of the heat generator 2 may be housed within a compartment of the heat generator 2 defining an internal volume. The compartment substantially defines a closed volume adapted to prevent a person from touching the electronic components of the control unit. Specifically, it should be noted that both the primary electronic board 10 and the secondary electronic board 20 are housed in said compartment of the heat generator 2.

The primary electronic board 10 may comprise a primary electrical connector 16 and the secondary electronic board 20 may comprise a secondary electrical connector 26 of the electrical input 21: in that case, the primary electrical connector 16 is configured to operationally connect to the secondary electrical connector 26 to define an electrical connection between the primary electronic board 10 and the secondary electronic board 20. The primary electrical connector 16 and the secondary electrical connector 26 define a removable connection system, which is snap-fit or interference-fit for example, between the primary electronic board 10 and the secondary electronic board 20. In a specific embodiment, the primary electrical connector 16 and the secondary electrical connector 26 define a male-female electrical connection, for example wherein the primary electrical connector 16 is a female connector and the secondary electrical connector 26 is a male connector. In fact, the secondary electronic board 20 defines an add-on module which is mountable on and demountable from the primary electronic board 10.

In an alternative embodiment, the primary electronic board 10 and the secondary electronic board 20 are constrained to each other in a fixed, that is non-removable, manner: for example, the primary electronic board 10 and the secondary electronic board 20 may be welded to each other without interruption to define a single body.

It should be noted that for the purposes of the present invention the secondary electronic board 20 is in a remote position with respect to the electric motor of the hydraulic circulator 3. In other words, once a first distance between the primary electronic board 10 and the secondary electronic board 20 has been defined and a second distance between the secondary electronic board 20 and the hydraulic circulator 3 has been defined, the second distance is greater than the first distance. In particular, a ratio between the second distance and the first distance is greater than 5, optionally greater than 10 or of 20.

The hydraulic circulator 3 may be connected to the power output 22 of the secondary electronic board 20 by means of an electrical connection cable 5. Said electrical connection cable 5 may be a flexible cable comprising two or more electrical wires connected to the coils of the electric motor.

It should be noted that the secondary electronic board 20 may comprise at least one heatsink (not shown in the attached figures) configured to dissipate thermal energy from the secondary electronic board 20. In particular, the sink may be provided when the circulator electric motor 3 has a maximum power that is greater than 10W, optionally greater than 30W. The sink is thermally connected, for example in contact, with the inverter 23 of the secondary electronic board 20, so as to dissipate the heat generated during an operating condition of the conditioning system. In detail, the sink may be in contact with the microprocessor 24 of the inverter 23, or with the transistor 25. Optionally, the sink may be in contact both with the microprocessor 24 and with the transistor 25.

In order to maximize the heat dissipation, the sink is made of a metallic material, for example aluminium or copper. Alternatively, the sink may be made of a polymer material: this polymer material may be in particular electrically insulating. It should be noted that the sink may be interposed between the primary electronic board 10 and the secondary electronic board 20.

The sink comprises a first face, placed in contact with the secondary electronic board 20 and having a surface with a substantially flat shape, and a second face opposite the first face. The second face may comprise a plurality of dissipating fins adapted to maximize the heat exchange surface.

In an optional embodiment, the control unit 4 may comprise an electric fan operating on the sink of the secondary electronic board 20: the fan is configured to generate, when driven in rotation, an air flow over the sink so as to increase the heat exchange.

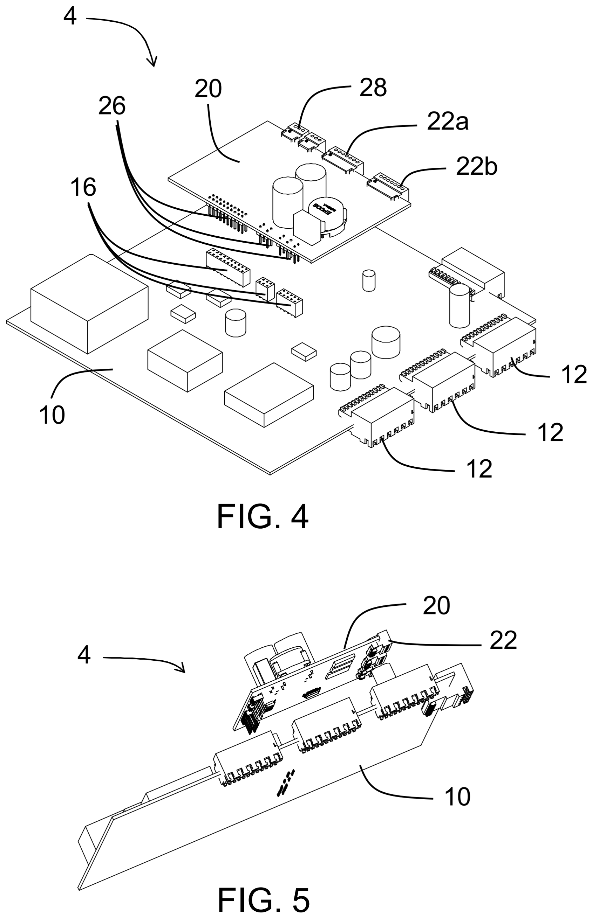

As shown in figures 2 and 4, the electrical power output 22 of the secondary electronic board 20 may comprise a first power output 22a and a second power output 22b, wherein the first power output is connectable or connected to the electric motor of the hydraulic circulator 3, and the second power output is connectable or connected to an auxiliary electric motor that is distinct from the hydraulic circulator 3. It should be noted that the first power output 22a and the second power output 22b are operationally independent of each other, such that the secondary electronic board 20 is configured to control the hydraulic circulator 3 and the auxiliary electric motor independently of each other.

The inverter 23 of the secondary electronic board 20 may comprise a first transistor, configured to electrically power the hydraulic circulator 3, and a second transistor configured to electrically power the auxiliary electric motor. The hydraulic circulator 3 and the auxiliary electric motor may comprise each a respective brushless electric motor. In particular, the electric motor of the hydraulic circulator 3 and the auxiliary electric motor may be both synchronous electric motors. Alternatively, the electric motor of the hydraulic circulator 3 and the auxiliary electric motor may be asynchronous electric motors.

Alternatively, in an embodiment, the electric motor of the hydraulic circulator 3 is an asynchronous electric motor, and the auxiliary electric motor is a synchronous electric motor, or vice versa in which the electric motor of the hydraulic circulator 3 is a synchronous electric motor and the auxiliary electric motor is an asynchronous electric motor.

The auxiliary electric motor may be operationally connected to a fan configured to expel fumes from the combustion chamber of the heat generator 2, or to introduce air into the combustion chamber of the heat generator 2. Alternatively, the conditioning system 100 comprises an auxiliary hydraulic circulator, which is distinct from the hydraulic circulator 3, comprising the auxiliary electric motor. In that case, the hydraulic circulator 3 and the auxiliary hydraulic circulator are both controlled and powered by the secondary electronic board 20.

### Advantages of the invention

The present invention has several technical advantages. Firstly, the fact that the electronics of the circulator has been "moved" on the primary electronic board of the heat generator allows to reduce the operating temperatures of the secondary electronic board, that is of the board arranged to power the electric motor.

Furthermore, the fact that the circulator electronics is placed on board the heat generator facilitates the compatibility of different circulators (which may in fact comprise only the mechanical and analogue component of the motor) with the secondary electronic board of the heat generator.

Furthermore, the present invention allows the environmental impact to be limited: in fact, in prior art cases in which each circulator comprised its own on-board electronics, a failure of its on-board electronics determined the necessary replacement of the entire circulator (and thus the replacement of a still operating motor). Instead, in accordance with the present invention, a failure of the secondary electronic board does not determine the replacement of the circulator.

## Claims

1. A conditioning system (100) connectable to a conditioning circuit (1), said conditioning system (100) comprising:
- a heat generator (2) carrying a respective control unit (4), said control unit (4) comprising a primary electronic board (10) and a secondary electronic board (20) operationally connected to the primary electronic board (10);
- at least one hydraulic circulator (3) configured to determine a circulation of a working fluid within said conditioning circuit (1), said hydraulic circulator (3) comprising an electric motor activatable to determine said working fluid circulation in the conditioning circuit (1),
wherein the secondary electronic board (20) comprises at least one inverter (23) configured to electrically power electric coils of the electric motor of the hydraulic circulator (3).

2. The conditioning system (100) according to the preceding claim, wherein said electric motor is a synchronous motor or an asynchronous motor,
said electric motor of the hydraulic circulator (3) being a brushless motor,
and wherein one of the primary electronic board (10) and the secondary electronic board (20) carries at least one electrical power output (22) connectable or connected to said electric motor of the hydraulic circulator (3).

3. The conditioning system (100) according to the preceding claim, wherein said at least one electrical power output (22) is configured to withstand a maximum electrical power that is greater than 3W, optionally greater than 5W, optionally between 3W and 500W, more optionally between 5W and 500W, even more optionally between 10W and 250W,
and wherein said secondary electronic board (20) is configured to supply, through said electrical power output (22), an electric current and voltage having intensity and frequency features that, when powering coils of the electric motor of the hydraulic circulator (3), allow the operation of said electric motor of the hydraulic circulator (3).

4. The conditioning system (100) according to any one of the preceding claims, wherein said inverter (23) of the secondary electronic board (20) is configured to vary a rotation speed of the electric motor of the hydraulic circulator (3) by means of a respective control logic, said control logic comprising a variation by said inverter (23) of a frequency and/or intensity of the output voltage from said inverter (23) to be sent to coils of the electric motor,
said inverter being configured to output, in particular through said at least one electrical power output (22), a maximum electrical power that is greater than 3W, optionally greater than 5W, optionally between 3W and 500W, more optionally between 5W and 500W, even more optionally between 10W and 250W.

5. The conditioning system (100) according to the preceding claim, wherein said control logic is executed by said secondary electronic board (20), and in particular by said inverter (23), by means of a Pulse Width Modulation PWM,
wherein the inverter (23) is configured to perform the Pulse Width Modulation by varying the supply voltage frequency of the electric motor of the hydraulic circulator (3).

6. The conditioning system (100) according to any one of the preceding claims 4 and 5, wherein said control logic comprises one of:
- an open-loop control V/f [Volt/Hertz] in which the inverter (23) of the secondary electronic board (20) is configured to simultaneously vary the supply voltage intensity and frequency of the electric motor so as to keep the V/f ratio substantially constant, where "V" is the supply voltage of the electric motor and "f" is the frequency of said supply voltage;
- a closed-loop control of the vectorial FOC (Field Oriented Control) type;
- a closed-loop control of the DTC (Direct Torque Control) type;
- a closed-loop control of the sensorless FOC type.

7. The conditioning system (100) according to any one of the preceding claims in combination with claim 2, wherein said inverter (23) of the secondary electronic board (20) comprises at least one microprocessor (24) and at least one transistor (25) electrically connected to each other, wherein electric outputs of said at least one transistor are connected to said at least one electrical power output (22) of the secondary electronic board (20) or of the primary electronic board (10),
wherein said at least one microprocessor (24) is configured to control said at least one transistor (25) to execute said control logic of the electric motor of the hydraulic circulator (3).

8. The conditioning system (100) according to any one of the preceding claims, wherein said inverter (23) of the secondary electronic board (20) is separated and spaced apart from said hydraulic circulator (3),
wherein said hydraulic circulator (3) does not comprise said inverter (23),
wherein the secondary electronic board (20) is physically constrainable or constrained, at least in one condition of use of the conditioning system (100), to the primary electronic board (10),
wherein the primary electronic board (10) and the secondary electronic board (20) define, when constrained to each other, a single body,
said secondary electronic board (20) being separated and spaced apart from said hydraulic circulator (3).

9. The conditioning system (100) according to any one of the preceding claims in combination with claim 2, wherein the at least one electrical power output (22) comprises a first power output (22a) and a second power output (22b), wherein the first power output (22a) is connectable or connected to the electric motor of the hydraulic circulator (3), and the second power output (22b) is connectable or connected to an auxiliary electric motor that is distinct from said hydraulic circulator (3),
the first power output (22a) and the second power output (22b) being operationally independent of each other,
wherein the electric motor of the hydraulic circulator (3) and the auxiliary electric motor are brushless electric motors,
wherein:
- the conditioning system (100) comprises a fan configured to expel fumes from a combustion chamber of the heat generator (2) or to introduce air into said combustion chamber of the heat generator (2), wherein said fan comprises said auxiliary electric motor; or
- the conditioning system (100) comprises an auxiliary hydraulic circulator, which is distinct from said hydraulic circulator (3), comprising said auxiliary electric motor.

10. The conditioning system (100) according to any one of the preceding claims, wherein said secondary electronic board (20) comprises at least one electrical input (21) configured to receive at least one electrical signal from said primary electronic board (10),
wherein said primary electronic board (10) comprises at least one primary electrical connector (16) and said secondary electronic board (20) comprises at least one secondary electrical connector (26) of said at least one electrical input (21), wherein said primary electrical connector (16) is configured to operationally connect to said secondary electrical connector (26) to define an electrical connection between said primary electronic board (10) and said secondary electronic board (20),
said primary electrical connector (16) and said secondary electrical connector (26) defining a removable connection system, which is optionally snap-fit or interference-fit, between said primary electronic board (10) and said secondary electronic board (20),
wherein said secondary electronic board (20) defines an add-on module which is mountable on and demountable from the primary electronic board (10).

11. The conditioning system (100) according to the preceding claim, wherein said at least one electrical input (21) of the secondary electronic board (20) comprises at least one electrical power input (21b, 21c) configured to electrically power the electric motor of the hydraulic circulator (3), said electrical power input (21b, 21c) of the secondary electronic board (20) being configured to withstand a maximum electrical power that is greater than 3W, optionally greater than 5W, optionally between 3W and 500W, more optionally between 5W and 500W, even more optionally between 10W and 250W,
and wherein the electrical power input (21b, 21c) of the secondary electronic board (20) is electrically connectable or connected:
- to the primary electronic board (10), in particular to the primary electrical connector (16) of the primary electronic board (10);
or
- to an auxiliary power supply socket that is distinct from said primary electronic board (10).

12. The conditioning system (100) according to any one of the preceding claims, wherein said heat generator (2) comprises a compartment defining an internal volume, said primary electronic board (10) and said secondary electronic board (20) being housed in said internal volume,
wherein said primary electronic board (10) is configured to determine the activation, the interruption, and optionally also a modulation, of a thermal output by said heat generator (2),
wherein:
- said heat generator (2) is a boiler for heating rooms, for example a gas or pellet boiler, and wherein said primary electronic board (10) is configured to determine the activation, the interruption, and optionally also the modulation of the heat thermal output to be sent to the conditioning circuit (1), optionally wherein said primary electronic board (10) is configured to determine at least the activation and interruption, and optionally also the intensity modulation, of a flame for the generation of said thermal output;
or
- said heat generator (2) is a heat pump for heating or cooling or for heating and cooling rooms, wherein said heat pump comprises at least one electric motor, a compressor kinematically connected to said electric motor, and a closed-loop gas circuit configured to contain a refrigerant gas, wherein said primary electronic board (10) is configured to determine at least the activation and interruption, optionally also a modulation, of the electric motor of the heat pump.

13. The conditioning system (100) according to any one of the preceding claims, wherein said hydraulic circulator (3) comprises a pump body and said electric motor housed in said pump body,
wherein the secondary electronic board (20) is spaced apart from said pump body,
wherein the secondary electronic board (20) is not carried by said pump body,
and wherein said hydraulic circulator (3) is not equipped with an on-board electronic board configured to control a speed variation of said electric motor of the hydraulic circulator (3),
wherein said hydraulic circulator (3) is not equipped with an inverter,
and wherein said secondary electronic board (20) is in a remote position with respect to said electric motor of the hydraulic circulator (3), wherein given a first distance between said primary electronic board (10) and said secondary electronic board (20) and given a second distance between said secondary electronic board (20) and said hydraulic circulator (3), said second distance is greater than said first distance, wherein a ratio between said second distance and said first distance is greater than 5, optionally greater than 10.

14. A heat generator (2) connectable to a conditioning circuit (1), wherein said heat generator (2) carries a respective control unit (4) comprising a primary electronic board (10) and a secondary electronic board (20) operationally connected to the primary electronic board (10);
wherein said secondary electronic board (20) comprises at least one inverter (23) configured to electrically power electric coils of an electric motor of a hydraulic circulator (3).

15. The heat generator (2) according to the preceding claim, wherein said inverter (23) of the secondary electronic board (20) is configured to vary a rotation speed of a synchronous or asynchronous brushless electric motor of said hydraulic circulator (3) by means of a respective control logic, said control logic comprising the variation by said inverter (23) of a frequency and/or intensity of the output voltage from said inverter (23) to be sent to the coils of the electric motor of the hydraulic circulator (3),
wherein said electric motor is a synchronous or asynchronous brushless motor,
and wherein one of the primary electronic board (10) and the secondary electronic board (20) carries at least one electrical power output (22) connectable or connected to said electric motor of the hydraulic circulator (3).
